# EUROPÄISCHE PATENTSCHRIFT

(11) **EP 1 457 370 B1**
(45) Veröffentlichungstag und Bekanntmachung des Hinweises auf die Patenterteilung: **07.01.2009**
(21) Anmeldenummer: 04004968.6
(22) Anmeldetag: 03.03.2004
(51) Int. Cl.: B60H 1/34

(54) **Luftdüse**
Air nozzle
Buse d'air

(30) Priorität: 14.03.2003 DE 10311398
(43) Veröffentlichungstag der Anmeldung: 15.09.2004
(73) Patentinhaber: Behr GmbH & Co. KG, 70469 Stuttgart (DE)
(72) Erfinder: Klingler, Dietrich, 73540 Heubach (DE)
(74) Vertreter: Grauel, Andreas

(56) Entgegenhaltungen:
- EP-A- 0 412 063
- US-A- 5 906 355
- US-A- 6 146 265

## Beschreibung

Die Erfindung betrifft eine Luftdüse, insbesondere für ein Kraftfahrzeug, gemäß dem Oberbegriff des Anspruchs 1.

Herkömmliche Luftdüsen für die Luftzufuhr in den Fahrzeuginnenraum weisen in der Regel Klappen und/oder Lamellen auf, welche die Luft entsprechend der Einstellung der Luftdüse in den Fahrzeuginnenraum leiten, d.h. nach oben, unten, rechts oder links umlenken, oder absperren, wobei für letzteres zumeist eine getrennte, zusätzliche Klappe vorgesehen ist. Hierbei treten Geräuschprobleme auf, beispielsweise bei kleiner werdenden Luftspalten. Ferner ist der Luftwiderstand relativ groß. Bei einer elektrischen Ansteuerung sind in der Regel mehrere Motoren erforderlich, um alle Funktionen zu erfüllen.

Aus der EP 0 412 063 A1 ist eine in einem Armaturenbrett versenkbare Luftdüse bekannt, bei der die Austrittsöffnung mittels einer oder zweier umlaufender Folien verschließbar ist.

Es ist Aufgabe der Erfindung, eine verbesserte Luftdüse zur Verfügung zu stellen.

Diese Aufgabe wird gelöst durch eine Luftdüse mit den Merkmalen des Anspruchs 1. Vorteilhafte Ausgestaltungen sind Gegenstand der Unteransprüche.

Efindungsgemäß ist eine Luftdüse mit einer Luftleit- und -dosierfunktion, insbesondere für ein Kraftfahrzeug, mit einem Gehäuse vorgesehen, die mindestens ein Rollband aufweist, welches die von einem Belüftungskanal zugeführte Luft leitet und/oder absperrt. Die Verwendung von Rollbändern ermöglicht mit einem relativ kostengünstigen Aufbau eine geräuscharme Regelung der Luftzufuhr in den Fahrzeuginnenraum. Ferner ist nur ein geringer luftseitiger Widerstand gegeben.

Bevorzugt sind hierbei zwei Rollbänder vorgesehen, die in einem Ausgangszustand symmetrisch bezüglich einer Mittellinie angeordnet sind.

Vorzugsweise weist jedes Rollband eine Wickelrolle auf, die fest mit dem Rollband verbunden ist und die überschüssiges Rollband aufwickelt, so dass das Rollband stets gespannt ist und nicht durchhängt.

Mindestens eine Rolle ist vorgesehen, die entlang einer Bahn, insbesondere einer kreisbogenförmigen Bahn, beweglich ist. Eine derartige Bahn ist einerseits technisch relativ einfach zu realisieren und ermöglicht andererseits eine gute recht weiträumige Luftzufuhr.

Bevorzugt ist mindestens ein Rollbandende am Gehäuse der Luftdüse fest angebracht, insbesondere luftanströmseitig. Ferner ist eine Stützrolle vorgesehen, welche insbesondere senkrecht zur Mittellinie verfahrbar ist.

Für den Antrieb der Luftdüse ist bevorzugt eine Antriebsanordnung, insbesondere in Art eines Planetengetriebes, vorgesehen, welche zwei Rollen bewegt, so dass zwei spiegelbildlich angeordnete Rollbänder, die jeweils einer der Rollen zugeordnet sind, gegenläufig öffen- oder schließbar und für die Änderung der Luftaustrittsrichtung parallel zueinander verstellbar sind.

Im folgenden wird die Erfindung anhand zweier Ausführungsbeispiele unter Bezugnahme auf die Zeichnung im einzelnen erläutert. In der Zeichnung zeigen:
- Fig. 1a bis 1d: eine Luftdüse gemäß dem ersten Ausführungsbeispiel in verschiedenen Stellungen, wobei Fig. 1a den Ausgangszustand, Fig. 1b den Zustand "gerichteter Stahl mittig", Fig. 1c den Zustand "gerichteter Strahl nach oben" und Fig. 1d den geschlossenen Zustand schematisiert darstellt und in allen vier Figuren der Ausgangszustand von Fig. 1a gestrichelt dargestellt ist,
- Fig. 2a und 2b: eine Luftdüse gemäß dem zweiten Ausführungsbeispiel in der Stellung "geradeaus Richten" und "Streuen", wobei in Fig. 2a noch die Stellungen "Richten nach oben" und "Richten nach unten" angedeutet sind,
- Fig. 3: eine schematische Darstellung des Fahrzeuginnenraums mit einer Mehrzahl von Luftdüsen, und
- Fig. 4: eine Antriebsvorrichtung für die Luftdüse von den Figuren 1a bis 1d.

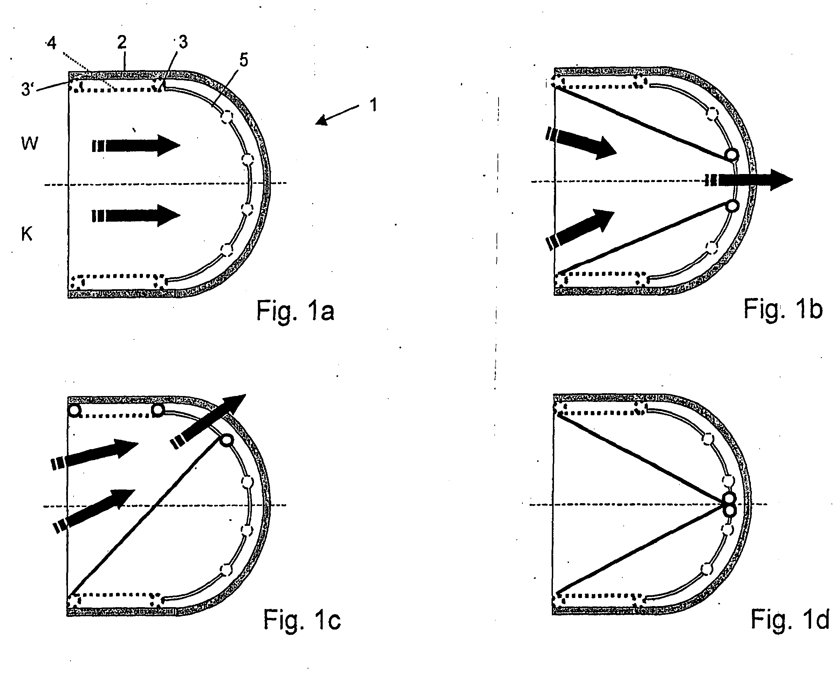

Eine erfindungsgemäße Luftdüse 1 gemäß einem ersten Ausführungsbeispiel weist ein Gehäuse 2 sowie zwei mittels je zweier Rollen 3 betätigbare Rollbänder 4 auf, wobei die hinteren Rollen 3, in den Figuren 1a bis 1d jeweils links dargestellt, ortsfeste Rollen 3, welche als Wickelrollen 3' dienen, und die vorderen Rollen 3 entlang einer kreisbogenförmigen Bahn 5 entlang verfahrbare, bewegliche Rollen 3 sind.

Gemäß der Darstellung von Fig. 1a befinden sich die beiden Rollbänder 4 im Ausgangszustand, d.h. sie sind im Bereich der Seitenwände des Gehäuses 2 angeordnet. Es erfolgt keine nennenswerte Beeinflussung der die Luftdüse 1 durchströmenden Luft durch die Rollbänder 4, so dass die Luft im wesentlichen geradeaus aus der Luftdüse 1 austritt.

Erfolgt eine Verstellung der Luftdüse 1 aus dem Ausgangszustand von Fig. 1a in die Stellung "gerichteter Strahl mittig", so werden die beiden vorderen Rollen 3 entlang der in einem Kreisbogen verlaufenden Bahn 5 in eine voneinander etwas beabstandete Stellung verfahren, so dass die Rollbänder 4 in einem Winkel schräg aufeinander zu verlaufen, wobei der Scheitel des Winkels außerhalb des Gehäuses 2 angeordnet ist. Die beiden hinteren Rollen verbleiben in ihrer Ausgangsposition, geben jedoch in Folge einer Abwickelbewegung Rollbandmaterial frei, so dass die beiden Rollbänder 4 ausreichend lang sind, jedoch nicht durchhängen und noch unter ausreichender Spannung stehen.

In der Stellung "gerichteter Strahl nach oben", die in Fig. 1c dargestellt ist, befinden sich die beiden oberen Rollen 3 im in Fig. 1a dargestellten Ausgangszustand, die vordere untere Rolle 3 ist entlang der im Kreisbogen verlaufenden Bahn 5 gegenüber dem in Fig. 1b dargestellten Zustand noch weiter nach oben verfahren, so dass diese Rolle 3 die in den Figuren 1a bis 1d als Strich-Punkt-Linie dargestellte Mittellinie überquert hat, und die hintere untere Rolle 3 befindet sich in ihrer Ausgangsposition, wobei jedoch das Rollband 4 weit abgewickelt ist. Die Stellung "gerichteter Strahl nach unten" entspricht dem Spiegelbild der Fig. 1c um die Mittellinie.

Um die Luftdüse 1 zu schließen, werden die beiden vorderen Rollen 3 in ihre der Mittellinie am nächsten liegende Stellung verfahren, so dass sich die beiden Rollbänder 4 berühren und ein Luftaustritt verhindert wird.

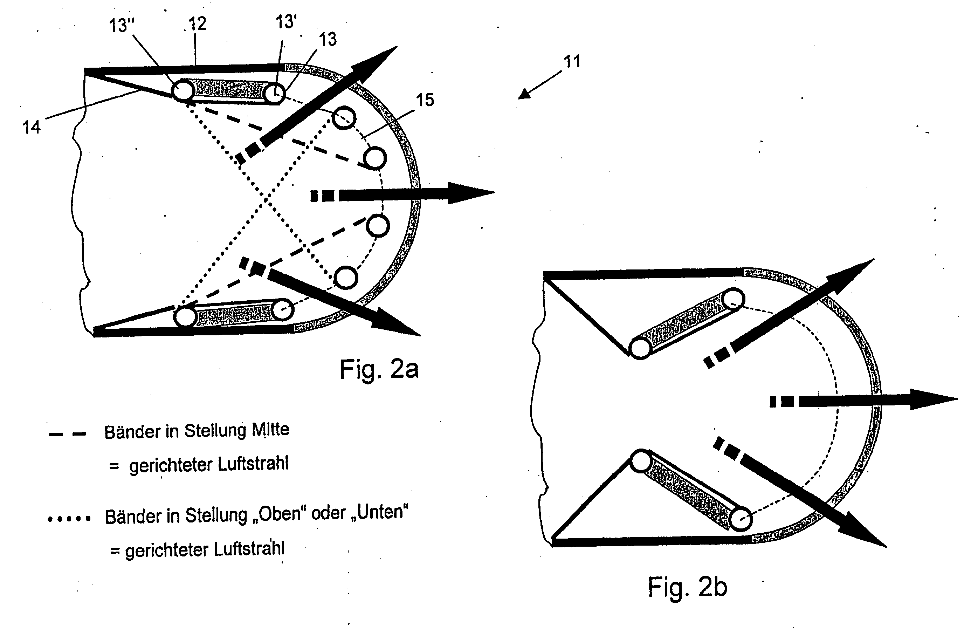

Eine Luftdüse 11 gemäß einem zweiten, in den Figuren 2a und 2b dargestellten Ausführungsbeispiel hat zusätzlich zu den oben beschriebenen Stellungen weitere Funktionen, nämlich die Funktionen "Richten" und "Streuen". Hierfür ist sind die beiden Rollbänder 14 an ihren der Luftströmungsrichtung entgegenzeigenden Enden am Gehäuse 12 fest angebracht. Die Wickelfunktion wird von den beiden vorderen Rollen 13 übernommen, d.h. diese bilden die Wickelrollen 13', und jeweils eine Stützrolle 13", die in nicht dargestellten Führungsnuten geführt wird, kann im wesentlichen senkrecht zur Mittellinie (nicht dargestellt) verfahren werden, so dass die Rollbänder 14 durch diese Stützrolle 13" bei Bedarf umlenkbar sind. Die Stützrollen 13" sind etwa mittig zwischen dem fest angebrachten Ende der beiden Rollbänder 14 und dem Ausgangszustand der vorderen Rollen 13 angeordnet.

In Fig. 2a sind die bereits beim ersten Ausführungsbeispiel beschriebenen gerichteten Stellungen angedeutet, so dass diese nicht nochmals beschrieben werden. Bei der in Fig. 2b dargestellten Stellung "Streuen" wird die Luft durch eine Engstelle geleitet, welche durch die beiden aufeinander zu verfahrenen Stützrollen 13" und die entsprechend umgelenkten Rollbänder 14 gebildet wird. Der Grad der Streuung kann durch die Länge des Verfahrwegs der Stützrollen 13" bestimmt werden. Prinzipiell wäre auch eine Verschlussstellung möglich, wenn sich die beiden Rollbänder 14 berühren.

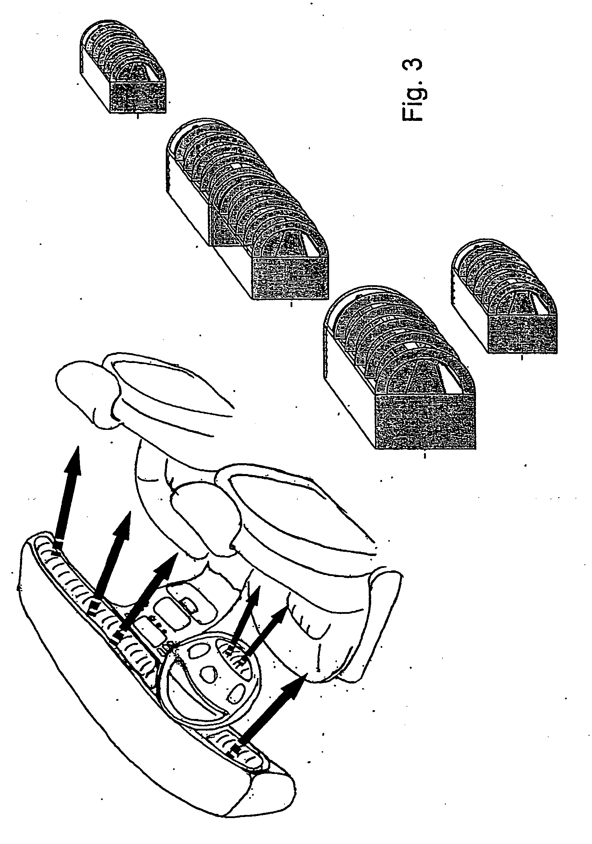

Fig. 3 zeigt mögliche Stellen, an denen die erfindungsgemäßen Luftdüsen eingebaut werden können. So sind Luftdüsen im Armaturenbrett als Seitendüsen und Mitteldüsen sowie im Lenkrad selbst angeordnet möglich.

Eine seitliche Umlenkung der Luft kann durch gedrehte Luftdüsen erreicht werden. Ebenfalls ist eine zweistufige Luftdüse möglich, in der zwei um 90° zueinander verdreht angeordnete Luftdüsen hintereinander angeordnet sind.

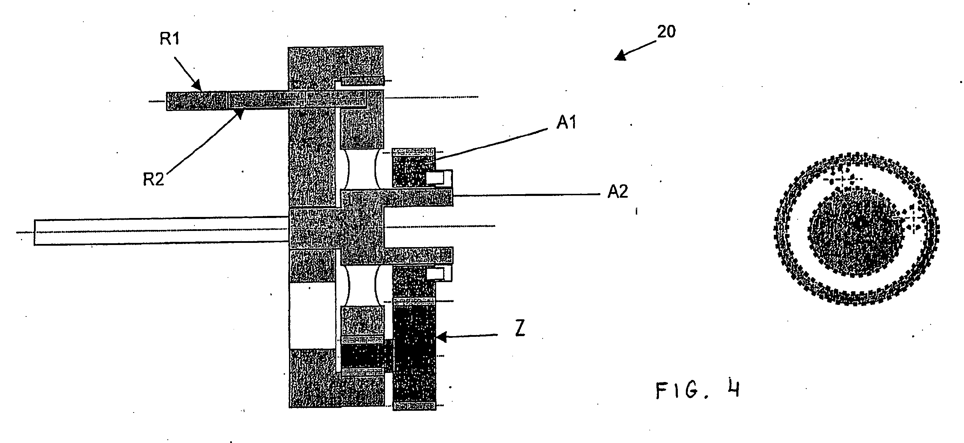

In Fig. 4 ist eine Antriebsvorrichtung 20 dargestellt, bestehend aus einer Mehrzahl von Zahnrädern und Zahnsegmenten, welche die Rollen 3 gemäß dem ersten Ausführungsbeispiel bewegt. Wird hierbei ein Antriebsrad A1 angetrieben, so bewegen sich die Rollen R1 und R2 je nach Drehrichtung des Motors auseinander oder aufeinander zu. Wird ein zweites Antriebsrad A2 betätigt, so werden je nach Drehrichtung beide Rollen R1 und R2 gleichzeitig bewegt. Läuft eine Rolle auf Anschlag, so werden die beiden Rollen R1 und R2 gemeinsam geschoben.

### Bezugszeichenliste

- 1, 11: Luftdüse
- 2, 12: Gehäuse
- 3, 13: Rolle
- 3';: 13' Wickelrolle
- 13": Stützrolle
- 4, 14: Rollband
- 5, 15: Bahn
- 20: Antriebsvorrichtung

- A1, A2: Antriebsrad
- R1, R2: Rolle

## Patentansprüche

1. Luftdüse mit einer Luftleit- und -dosierfunktion, insbesondere für ein Kraftfahrzeug, mit einem Gehäuse (2; 12) und mindestens einem Rollband (4; 14), **dadurch gekennzeichnet, dass** dem mindestens einem Rollband mindestens eine Rolle (3; 13) zugeordnet ist, die entlang einer Bahn (5; 15) beweglich ist.

2. Luftdüse nach Anspruch 1, **dadurch gekennzeichnet, dass** die mindestens eine Rolle (3; 13) entlang einer kreisbogenförmigen Bahn (5; 15) verfahrbar ist.

3. Luftdüse nach Anspruch 1 oder 2, **dadurch gekennzeichnet, dass** zwei Rollbänder (4; 14) vorgesehen sind, die in einem Ausgangszustand symmetrisch bezüglich einer Mittellinie angeordnet sind.

4. Luftdüse nach einem der vorhergehenden Ansprüche, **dadurch gekennzeichnet, dass** jedes Rollband (4; 14) eine Wickelrolle (3'; 13') aufweist, die fest mit dem Rollband (4; 14) verbunden ist.

5. Luftdüse nach einem der vorhergehenden Ansprüche, **dadurch gekennzeichnet, dass** mindestens ein Rollband (14) mit einem Ende am Gehäuse (12) der Luftdüse (11) fest angebracht ist.

6. Luftdüse nach einem der vorhergehenden Ansprüche, **dadurch gekennzeichnet, dass** mindestens ein Rollband (14) eine Stützrolle (13") zugeordnet ist.

7. Luftdüse nach Anspruch 6, **dadurch gekennzeichnet, dass** die Stützrolle (13") verfahrbar ist.

8. Luftdüse nach Anspruch 7, **dadurch gekennzeichnet, dass** die Stützrolle (13") senkrecht zur Mittellinie verfahrbar ist.

9. Luftdüse nach einem der vorhergehenden Ansprüche, **dadurch gekennzeichnet, dass** eine Antriebsanordnung (20) vorgesehen ist, welche zwei Rollen (R1, R2) bewegt, so dass zwei spiegelbildlich angeordnete Rollbänder, die jeweils einer der Rollen (R1, R2) zugeordnet sind, gegenläufig öffen- oder schließbar und für die Änderung der Luftaustrittsrichtung parallel zueinander verstellbar sind.

## Claims

1. Air nozzle with an air guidance and metering function, in particular for a motor vehicle, with a housing (2; 12) and at least one rolling tape (4; 14), **characterised in that** at least one roller (3; 13) movable along a path (5; 15) is assigned to the at least one rolling tape.

2. Air nozzle according to claim 1, **characterised in that** the at least one roller (3; 13) is movable along a circular arc-shaped path (5; 15).

3. Air nozzle according to claim 1 or 2, **characterised in that** two rolling tapes (4; 14) are provided, which are disposed symmetrically relative to a central line in a starting position.

4. Air nozzle according to any of the preceding claims, **characterised in that** each rolling tape (4; 14) is provided with a winding roller (3'; 13') which is permanently joined to the rolling tape (4; 14).

5. Air nozzle according to any of the preceding claims, **characterised in that** the end of at least one rolling tape (14) is fixed to the housing (12) of the air nozzle (11).

6. Air nozzle according to any of the preceding claims, **characterised in that** a supporting roller (13") is assigned to at least one rolling tape (14).

7. Air nozzle according to claim 6, **characterised in that** the supporting roller (13") is movable.

8. Air nozzle according to claim 7, **characterised in that** the supporting roller (13") is movable at right angles to the central line.

9. Air nozzle according to any of the preceding claims, **characterised in that** a drive arrangement (20) is provided, which moves two rollers (R1, R2), so that two rolling tapes arranged in a mirror image formation, each of which is assigned to one of the rollers (R1, R2), can be opened up or closed in opposite senses and adjusted parallel to one another for changing the air outlet direction.

## Revendications

1. Buse d'air comprenant une fonction de déflexion et de dosage d'air, en particulier pour un véhicule automobile, comprenant un boîtier (2 ; 12) et au moins une bande en rouleau (4 ; 14),
**caractérisée en ce qu'**au moins un rouleau (3 ; 13) est associé à au moins une bande en rouleau, rouleau qui est mobile le long d'une piste (5 ; 15).

2. Buse d'air selon la revendication 1, **caractérisée en ce que** le rouleau (3 ; 13) au moins au nombre de un peut être mobile le long d'une piste (5 ; 15) en forme d'arc de cercle.

3. Buse d'air selon la revendication 1 ou 2, **caractérisée en ce qu'**il est prévu deux bandes en rouleau (4 ; 14) qui, à l'état initial, sont disposées de façon symétrique par rapport à un axe central.

4. Buse d'air selon l'une quelconque des revendications précédentes, **caractérisée en ce que** chaque bande en rouleau (4 ; 14) présente un rouleau d'enroulement (3' ; 13') qui est relié fixement à la bande en rouleau (4 ; 14).

5. Buse d'air selon l'une quelconque des revendications précédentes, **caractérisée en ce qu'**au moins une bande en rouleau (14) est montée fixement, par une extrémité, sur le boîtier (12) de la buse d'air (11).

6. Buse d'air selon l'une quelconque des revendications précédentes, **caractérisée en ce qu'**un rouleau support (13") est associé à au moins une bande en rouleau (14).

7. Buse d'air selon la revendication 6, **caractérisée en ce que** le rouleau support (13") est mobile.

8. Buse d'air selon la revendication 7, **caractérisée en ce que** le rouleau support (13") est mobile perpendiculairement à l'axe central.

9. Buse d'air selon l'une quelconque des revendications précédentes, **caractérisée en ce qu'**il est prévu un dispositif d'entraînement (20) qui déplace deux rouleaux (R1, R2), de manière telle que deux bandes en rouleau, disposées de façon symétrique, qui sont affectées respectivement à l'un des rouleaux (R1, R2), puissent être ouvertes ou fermées en sens inverse et réglables de façon parallèle l'une par rapport à l'autre, pour la modification de la direction de sortie d'air.
